# EUROPEAN PATENT APPLICATION

(11) **EP 0 830 003 A2**
(43) Date of publication of application: **18.03.1998**
(21) Application number: 97115983.5
(22) Date of filing: 13.09.1997
(51) Int. Cl.: H04N 1/10

(54) **Apparatus for scanning slides**

(30) Priority: 16.09.1996 DE 19637627
(71) Applicant: EASTMAN KODAK COMPANY, Rochester, New York 14650 (US)
(72) Inventor: Fecher, Gerd, 70323 Stuttgart (DE)
(74) Representative: Reichert, Werner Franz, Dr.

(57) **Abstract**

An apparatus for scanning slides comprises a slide projector (4) and a scanning device (6) with a CCD sensor (14), said scanning device being connectable to the slide projector (4) at the opening (5) for a projection lens. Provided at the opening (5) for the projection lens is a pinhole diaphragm (12) by which the CCD sensor (14) provided in the scanning device can be illuminated. The image data determined by the CCD sensor (14) are displayed on a screen (16) and/or stored in a data base.

## Description

The invention relates to an apparatus for scanning slides, said apparatus comprising a slide projector and a scanning device with a CCD sensor, said scanning device being connectable to the slide projector at the opening for a projection lens.

A device for presenting slides is disclosed in DE-C1-38 08 539. The device is composed similarly to a slide projector and has a receptacle for a slide tray and a slide changer for placing one slide at a time in the optical path. The slide situated in the optical path is imaged on CCD elements by means of the optical system provided in the device. With the aid of the output signals of the CCD elements, a television receiver can be controlled for reproduction of the scanned slide.

An apparatus for scanning series of slides is disclosed in the periodical "Phototechnik International 6/94", page 104. For this purpose, a so-called scan projector is equippd with a camera having a CCD area sensor in the focal plane. The camera mounted on the scan projector is disclosed in DE-OS 44 23 425. The camera has an exchangeable lens and a filter system rotatably arranged in such a way that the individual filter elements are rotatable over the CCD area sensor. By means of the scan projector provided with the camera, it is possible for entire series of slides to be scanned and archived.

The object of the present invention is to provide a scanning apparatus which can be used with conventional slide projectors without any modification measures and with which very good imaging properties can be attained in an especially cost-advantageous manner.

According to the invention, this object is attained in that a pinhole diaphragm is provided at the opening for the projection lens, said diaphragm allowing the CCD sensor provided in the scanning device to be illuminated.

Advantageously, the apparatus according to the invention is configured such that instead of the usual projection lens, a pinhole diaphragm effects the imaging of the slide on the CCD sensor. By this means, on the one hand the light of the illuminating system on the solid state sensor is reduced to the necessary extent, and on the other hand the slide is imaged with high definition on the CCD sensor provided in the scanning device. In addition, the scanning device is attachable to a commercial slide projector in a simple manner. Thus an apparatus for scanning slides is obtained in a simple fashion, without substantial modification measures having to be carried out in the slide projector, or even having to procure a special scanning apparatus.

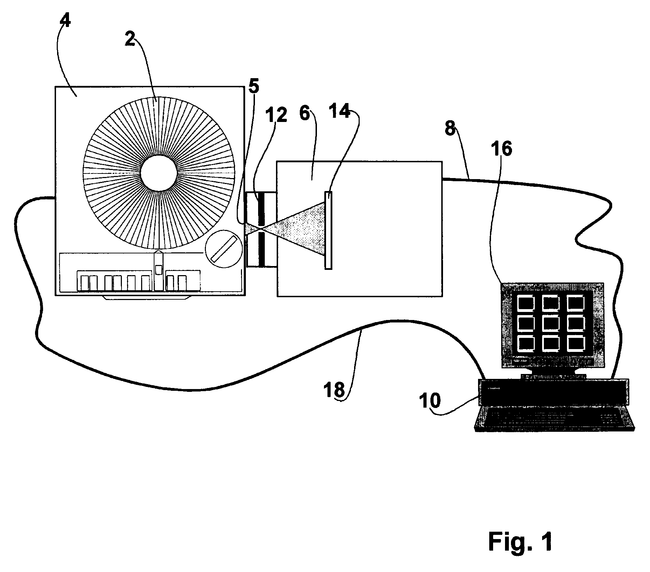

The subject matter of the invention will be explained in more detail with reference to the description below in conjunction with the drawing, in which
- Fig. 1: is a schematic representation of the apparatus for scanning slides.

The slides to be scanned are stored in sequence in a magazine 2 of a conventional slide projector 4. In the embodiment shown here, a slide projector 4 with a circular tray is used. The slides to be scanned are put into the optical path of the slide projector, using the transport and slide changing means already provided in the slide projector 4.

The slide in the optical path is illuminated by the conventional illuminating device (not shown) of the slide projector 4. Depending on the type of slide projector 4 used, a ground glass plate (not shown) can be provided between the condenser (not shown) and the slide.

The projection lens of the slide projector 4 is removed. Mounted at the opening 5 for the projection lens is a scanning device 6 connected to a computer 10 via a first control line 8 for the scanning device 6.

The scanning device 6 is provided with a pinhole diaphragm 12 through which the light coming from the illuminated slide falls on a CCD sensor 14 incorporated in the scanning device 6. The CCD sensor 14 can also take the form of a line sensor suitably traversable in the focal plane. Furthermore, the CCD sensor 14 can take the form of a CCD area sensor on which the entire slide is imaged. The image information resulting from the illumination of the CCD sensor 14 is transmitted via the control line 8 to the computer 10. The scanned slides are displayed on a screen 16 of the computer 10.

The slide projector 4 is connected to the computer 10 via a second control line 18. The computer 10 therefore controls the slide transport operation and the time necessary for sufficient exposure of the CCD sensor 14.

Suitable software is installed in the computer 10, enabling the scanned image data to be displayed on the screen 16 of the computer 10 and archived in a suitable data base.

Furthermore, a video electronic system (not shown) can be connected downstream of the CCD sensor 8, so that the scanned slides can be displayed directly on a monitor.

The invention was described with reference to a preferred embodiment, but it will be appreciated that it is within the capability of those skilled in the art to make modifications without departing from the scope of the claims set forth hereinafter.

## Claims

1. Apparatus for scanning slides, said apparatus comprising a slide projector (4) and a scanning device (6) with a CCD sensor (14), said scanning device being connectable to the slide projector (4) at the opening (5) for a projection lens, characterized in that a pinhole diaphragm is provided at the opening for the projection lens, said diaphragm allowing the CCD sensor provided in the scanning device to be illuminated.

2. Apparatus according to claim 1, characterized in that the pinhole diaphragm (12) is firmly connected to the scanning device (6) and is mountable together with the scanning device (6) on any slide projectors.

3. Apparatus according to claims 1 to 2, characterized in that a computer (10) is provided by means of which the scanning device (6) is controllable via a first control line (8).

4. Apparatus according to claims 1 to 2, characterized in that a computer (10) is provided by means of which the scanning device (6) is controllable via the first control line (8) and the mode of operation of the slide projector (4) is controllable via a second control line (18).

5. Apparatus according to claim 3 or 4, characterized in that the computer (10) is provided with suitable software, enabling the scanned image data to be displayed on a screen (16) and archived in a data base.

6. Apparatus according to claim 1, characterized in that a video electronic system can be connected downstream of the CCD sensor 8, so that the scanned slides can be displayed directly on a monitor.
